# EUROPÄISCHE PATENTSCHRIFT

(11) **EP 3 935 414 B1**
(45) Veröffentlichungstag und Bekanntmachung des Hinweises auf die Patenterteilung: **10.01.2024**
(21) Anmeldenummer: 20711070.1
(22) Anmeldetag: 04.03.2020
(51) Int. Cl.: G01S 19/48, G01S 5/02

(54) **LOKALISIERUNGSSYSTEM FÜR EIN FAHRERLOSES FAHRZEUG**
LOCALIZATION SYSTEM FOR A DRIVERLESS VEHICLE
SYSTÈME DE LOCALISATION D'UN VÉHICULE SANS CONDUCTEUR

(30) Priorität: 08.03.2019 DE 102019203202
(43) Veröffentlichungstag der Anmeldung: 12.01.2022
(73) Patentinhaber: ZF Friedrichshafen AG, 88046 Friedrichshafen (DE)
(72) Erfinder: BIEL, Steffen, 88046 Friedrichshafen (DE); NEIVA, Eduardo, 88046 Friedrichshafen (DE); WOLF, Daniel, 88048 Friedrichshafen (DE); VOLPERT, Bastian, 88048 Friedrichshafen- Kluftern (DE)
(74) Vertreter: ZF Friedrichshafen AG
(86) Internationale Anmeldenummer: PCT/EP2020/055642
(87) Internationale Veröffentlichungsnummer: WO 2020/182560

(56) Entgegenhaltungen:
- EP-A1- 3 291 617
- CN-A- 106 405 605
- DE-A1-102005 014 975
- HE WANG ET AL: "No need to war-drive", MOBISYS 2012: 10TH INTERNATIONAL CONFERENCE ON MOBILE SYSTEMS, APPLICATIONS AND SERVICES, 1. Januar 2012 (2012-01-01), Seite 197, XP055176420, DOI: 10.1145/2307636.2307655 ISBN: 978-1-45-031301-8

## Beschreibung

Die vorliegende Erfindung betrifft ein Lokalisierungssystem für ein fahrerloses Fahrzeug sowie ein Verfahren zur Lokalisierung des fahrerlosen Fahrzeugs.

Fahrerlos fahrende Fahrzeuge benötigen eine möglichst statische Umgebung, um sich sicher lokalisieren und dann entsprechend navigieren zu können. Die Lokalisierung erfolgt im Innenbereich mit Hilfe von Umfeld-Sensoren und im Außenbereich mit Hilfe von GNSS.

Insbesondere im Innenbereich, also z. B. einer Halle, erfolgt die Lokalisierung anhand einer Orientierung an der Infrastruktur, beispielsweise mittels Sensoren und SLAM-Verfahren zum Erstellen einer lokalen Karte der Umgebung. Im Außenbereich erfolgt die Lokalisierung mittels GNSS, also satellitengestützt, da in der Regel keine oder keine ausreichende statische Infrastruktur vorhanden ist, an der sich das Fahrzeug orientieren kann. Problemtisch ist der Übergang zwischen Außenbereich und Innenbereich bzw. zwischen Innenbereich und Außenbereich, d.h. das zuverlässige Umschalten zwischen zwei Lokalisierungsmethoden.

CN 106 405 605 A offenbart ein Positionierungsverfahren für Roboter im Innen- und Außenbereich auf der Grundlage von ROS und GPS. DE 10 2005 014 975 A1 betrifft ein Verfahren zum Orten eines Objekts, insbesondere einer Person, das bzw. die sich zumindest in einer ersten Zone und in einer zweiten Zone aufhalten kann. Des Weiteren betrifft die Erfindung eine Vorrichtung zum Orten eines Objekts. EP 3 291 617 A1 zeigt eine Positionierungstechnologie und insbesondere ein mobiles Endgerätesteuerungsverfahren, eine Vorrichtung und ein System.

Deshalb ist es eine Aufgabe der Erfindung, ein Lokalisierungssystem für ein fahrerloses Fahrzeug bereitzustellen, das ein zuverlässiges Umschalten zwischen einem Lokalisierungsverfahren in einem Außenbereich und einem Lokalisierungsverfahren in einem Innenbereich oder vice versa ausführen kann. Ziel ist es also, eine zuverlässige Lokalisierung eines fahrerlosen Fahrzeugs in einem Übergangsbereich zwischen Innenbereich und Außenbereich oder vice versa zu ermöglichen.

Für Anwendungen im Innenbereich (Indoor) werden bei fahrerlosen, d.h. automatisierten bis hin zu autonomen, Fahrzeugen z. B. Laserscanner zur Lokalisierung und zur Navigation des Fahrzeugs sowie zur Umfelderfassung verwendet. So wird ein geeigneter Fahrweg von einem Startpunkt zu einem Zielpunkt ermittelt, welcher kollisionsfrei abgefahren werden kann. Das für den Innenbereich verwendete Sensorset ist aufgrund seiner Empfindlichkeit gegenüber Verschmutzung und Witterungseinflüssen in der Regel nur für den Indoor-Gebrauch verwendbar, also z. B. in Hallen.

Für Anwendungen im Außenbereich (Outdoor) wird bei fahrerlosen, d.h. automatisierten bis hin zu autonomen, Fahrzeugen zur Lokalisierung vorteilhaft ein satellitenunterstütztes System GNSS verwendet. Dieses kann aber im Innenbereich nicht verwendet werden, da der Signalempfang in der Regel zu schwach oder unzuverlässig ist.

Die verwendeten Systeme im Innenbereich und im Außenbereich funktionieren unabhängig voneinander sehr gut zur Lokalisierung des Fahrzeugs in dem jeweiligen Bereich. Problematisch ist es, den Übergang zwischen den Bereichen, also Innenbereich und Außenbereich oder vice versa, zuverlässig zu erkennen und das Lokalisierungsverfahren entsprechend schnell umzustellen. Dieses Problem wird durch das nachfolgend beschriebene System gelöst.

Vorgeschlagen wird ein Lokalisierungssystem für ein fahrerloses Fahrzeug, welches fahrerlos von einem Startpunkt zu einem Zielpunkt fährt, wobei das Lokalisierungssystem ein Sensorset zur Lokalisierung des Fahrzeugs in einem Innenbereich und zusätzlich mindestens eine Erfassungseinrichtung zur Lokalisierung des Fahrzeugs in einem Außenbereich aufweist. Ferner stellt das Lokalisierungssystem mindestens ein Orientierungspunkt an einem Übergangsbereich zwischen einem Außenbereich und einem Innenbereich oder vice versa bereit, wobei bei Erfassen des mindestens einen Orientierungspunkts durch das Sensorset und/oder die Erfassungseinrichtung ein Umschalten von einer Lokalisierungsmethode zur Lokalisierung des Fahrzeugs in einem Innenbereich zu einer Lokalisierungsmethode zur Lokalisierung des Fahrzeugs in einem Außenbereich oder vice versa erfolgt.

Ein fahrerloses Fahrzeug fährt automatisiert bis hin zu autonom (entspricht Level 2 SAE J3016 Autonomiestufe und höher). Die Steuerung wird durch ein oder mehrere Steuergeräte ermöglicht, welche die zur Bereitstellung einer entsprechenden kollisionsfreien Trajektorie nötigen Daten verarbeiten und entsprechende Steuersignale zu den Aktoren des Fahrzeugs zur Umsetzung der Fahraufgabe ausgeben. Die benötigten Daten werden von am Fahrzeug verbauten Sensorsets und/oder Erfassungseinrichtungen ermittelt, welche Informationen zur Umgebung des Fahrzeugs, beispielsweise über dessen Standort, erhalten. Je nach Position bzw. Standort des Fahrzeugs wird dieses über entsprechende Lokalisierungsmethoden lokalisiert. Basierend auf dieser Information kann dann eine Navigation von einem Startpunkt zu einem Zielpunkt erfolgen.

Wenn sich das fahrerlose Fahrzeug von einem Innenbereich in einen Außenbereich oder vice versa bewegt, kann es sein, dass die für den jeweiligen Bereich verwendeten Lokalisierungseinrichtungen, also die Sensorsets bzw. Erfassungseinrichtungen, keine zuverlässige Lokalisierung mehr liefern, da sie z. B. kein stabiles Signal mehr erhalten oder keine Infrastruktur zur Orientierung vorhanden ist. Somit ist eine Änderung der Lokalisierungsmethode nötig. Das Erkennen des Übergangs zwischen diesen Bereichen, auch als Übergangsbereich bezeichnet, muss zuverlässig erfolgen, um ein nahtloses Fahren zwischen den Bereichen zu ermöglichen. Allerdings kann weder das Sensorset für die Lokalisierung im Innenbereich noch die Erfassungseinrichtung zur Lokalisierung im Außenbereich diese Aufgabe zufriedenstellend ausführen. Deshalb wird mindestens ein Orientierungspunkt, auch als Landmark bezeichnet, am Übergangsbereich bereitgestellt, welcher den entsprechenden Bereich als Übergangsbereich kennzeichnet.

Das Ziel einer Lokalisierung ist es, die exakte Position des Fahrzeuges zu ermitteln und jederzeit zur Verfügung stellen zu können. Die Fahrzeugposition umfasst dabei immer die Lage des Fahrzeuges in einem Koordinatensystem X, Y, Z (global oder lokal) sowie die Orientierung des Fahrzeuges als Lage- oder Eulerwinkel (Roll, Pitch, Yaw). Zur genauen Orientierung und Lokalisierung werden Karten zur Verfügung gestellt, die entweder vorab gespeichert sind oder in Echtzeit z. B. mittels SLAM ermittelt werden.

Durch das Bereitstellen mindestens eines Orientierungspunkts kann der Übergang der Lokalisierung des Fahrzeugs mittels GNSS zur Lokalisierung durch das Sensorset und oder vice versa erfolgen. Im Außenbereich sind nur sehr begrenzte Orientierungspunkte vorhanden, weshalb die Navigation in der Regel satellitengestützt erfolgt. Durch den oder die Orientierungspunkte kann die Position des Fahrzeugs in der globalen Karte und der lokalen Karte festgehalten werden, so dass der Übergang in beiden Karten markiert ist und bei der Steuerung des fahrerlosen Fahrzeugs auf diese Information zurückgegriffen werden kann. Somit kann bereits bei Erfassung des Annäherns oder (kurz vor) Eintreten in einen Übergangsbereich das Umschalten vorbereitet und bei Passieren des Übergangsbereichs dann durchgeführt werden.

In einer Ausführung ist der mindestens eine Orientierungspunkt eines aus einem QR-Code, einer definierten Struktur einer Infrastruktur, ein oder mehrere fest installierte Objekte, eine oder mehrere Fahrspuren, oder eine Kombination daraus.

Ein QR-Code kann an dem Übergangsbereich angebracht sein und von dem am Fahrzeug angeordneten Sensorset erfasst werden. Vorteilhaft erfolgt die Erfassung als optische Erfassung, also z. B. mittels Kamera. Die Erfassung einer definierten Infrastruktur kann über unterschiedliche Sensorik des Sensorsets erfolgen. Als Orientierungspunkt, der die Infrastruktur kennzeichnet, kann ein Dach einer Halle bzw. dessen Vorhandensein oder Nicht-Vorhandensein, ein als Übergangsbereich dienendes Tor bzw. Ein-/Ausfahrtstor, ein Rahmen einer Öffnung in einen Innenbereich oder zu einem Außenbereich, eine Hauskante, oder auch ein markanter Gebäudezug dienen. Fest installierte Objekte können ebenfalls als Orientierungspunkt dienen. Solche fest installierten Objekte sind beispielsweise ein oder mehrere Pfosten, eine Schranke, an einem Gebäude oder am Übergangsbereich befestigte Schilder oder andere fest installierte Objekte. Auch kann eine deren Fahrspur als Orientierungspunkt dienen. Entweder kann deren Vorhandensein oder Nicht-Vorhandensein auf einen Übergang zwischen Innenbereich und Außenbereich schließen lassen. Es kann aber auch eine Änderung der Art oder der Farbe der Linien auf einen solchen Übergang schließen lassen. Auch kann ein Übergangsbereich durch eine Änderung in der Linienführung, z. B. durch eine Querlinie, angezeigt werden.

In einer Ausführung erfolgt die Erfassung des Orientierungspunkts durch optische Erfassung oder durch 3D-Erfassung. Die Art der Erfassung, und damit des Sensorsets, ist je nach Art des Orientierungspunkts zu wählen. Für eine Erfassung eines Rahmens oder Tors kann eine 3D-Erfassung z. B. mittels 3D-Radar oder 3D-Lidar in Verbindung mit SLAM sinnvoll sein. Bei der Erfassung, ob ein Hallendach vorhanden ist, sich das Fahrzeug also im Innenbereich befindet, oder nur der Himmel, sich das Fahrzeug also im Außenbereich befindet, kann eine optische Erfassung mittels Kamera sinnvoll sein.

In einer Ausführung erfolgt die Lokalisierung in einem Außenbereich mittels der Erfassungseinrichtung über GNSS, also satellitengestützt. Zusätzlich kann die Lokalisierung auch mittels einer Inertialsensorik, sogenannten IMU's erfolgen. Diese sind eine räumliche Kombination mehrerer Inertialsensoren, welche insbesondere Beschleunigungssensoren und Drehratensensoren aufweisen und die Eigenbewegung eines Objekts erfassen. Durch Verwenden von IMU's kann die Lokalisierung über GNSS unterstützt werden.

In einer Ausführung umfasst das Sensorset zur Lokalisierung in einem Innenbereich mindestens eines aus LIDAR, RADAR, Kamera, Ultraschall, WLAN, UWB, Funk, Kamera oder eine Kombination daraus. Die Lokalisierung kann mittels SLAM erfolgen, da hierbei immer eine aktuelle Karte der Umgebung bereitgestellt wird. Diese Lokalisierung mittels der eben genannten Systeme kann selbstverständlich auch im Au-ßenbereich genutzt werden.

Unter dem Begriff SLAM, welcher aus dem Englischen Simultaneous Localization and Mapping herrührt und zu Deutsch Simultane Positionsbestimmung und Kartenerstellung genannt wird, ist ein Verfahren zu verstehen, bei dem ein mobiles Fahrzeug gleichzeitig eine Karte seiner Umgebung erstellen und seine Position (Pose) innerhalb dieser Karte schätzt. Bei einer SLAM Lokalisierung beispielsweise wird mit dem Verfahren "Scanmatching" versucht, eine Übereinstimmung der aktuell gemessenen Punktewolke innerhalb einer zuvor gespeicherten Karte zu finden.

Beispielsweise ist das Fahrzeug ein fahrerloses Transportfahrzeug. Im Logistikbereich werden Transportfahrzeuge eingesetzt, um Güter zu transportieren, in vorgesehene Lagereinrichtungen zu laden und daraus zu entladen. Neuere Entwicklungen ermöglichen es, viele dieser Arbeiten fahrerlos, also automatisiert oder sogar autonom, auszuführen. Um ein fahrerloses Fahren zu ermöglichen, werden entsprechende Sensorsysteme bzw. Sensorsets am Fahrzeug benötigt. Auch werden entsprechende Steuereinrichtungen benötigt, welche die Sensordaten verarbeiten und dann dem Fahrzeug den abzufahrenden Fahrweg vorgeben.

Als fahrerloses Transportfahrzeug, kurz FTF, oder Englisch Automated Guided Vehicle, kurz AGV, wird ein flurgebundenes Fördermittel bzw. kurz Flurfördermittel, bezeichnet, welches zum horizontalen und/oder vertikalen Materialtransport dient. Sein Antrieb wird über entsprechende Steuersignale von einer Steuereinrichtung gesteuert, so dass es automatisiert bzw. autonom fahren kann. Unter Materialtransport ist ein Fahren von Material von einem Anfangsort zu einem Zielort, aber auch ein Be- und/oder Entladen von Material, z. B. aus einem Hochregal, zu verstehen. Dabei kann das nachfolgende Transportieren von demselben FTF oder einem anderen Fahrzeug übernommen werden.

Durch das vorgeschlagene Lokalisierungssystem kann ein solches fahrerloses Transportfahrzeug auch Material fahrerlos von einem Innenbereich in einen Außenbereich oder vice versa transportieren.

Der Außenbereich kann ein Werksgelände oder ein abgeschlossenes Logistikgelände sein. Besonders im Logistikverkehr innerhalb abgeschlossener Gelände mit und ohne Hallen sind fahrerlose Fahrzeuge bzw. Transportfahrzeuge sowohl in Innenbereichen als auch in Außenbereichen tätig, so dass das Erkennen des Übergangsbereichs für den nahtlosen Materialtransport und eine kollisionsfreie Bewegung nötig ist. Ein abgeschlossenes Gelände ist als ein Gelände zu verstehen, auf welchem nur ein definierter Verkehr, d.h. nur berechtigte Fahrzeuge, fahren dürfen. Außerdem ist in solchen Geländen die Regelung des Verkehrs speziell für dieses Gelände vorgegeben.

Erfindungsgemäß weist das Lokalisierungssystem zusätzlich eine Kommunikationseinrichtung zur Kommunikation mit einem zusätzlich (optional) am Übergangsbereich bereitgestellten Leitsystem auf, wobei das Leitsystem zur Kommunikation und Steuerung mehrerer fahrerloser Fahrzeuge gebildet ist.

Mit Hilfe der Kommunikationseinrichtung, welche eine sogenannte Car2X bzw. V2X-Kommunikation erlaubt, könnte beispielsweise an einem Gebäudeeingang, also einem Übergangsbereich, eine virtuelle Ampel installiert werden. Diese könnte über ein Leitsystem Fahrzeuge für die Ein- oder Ausfahrt berechtigen oder das weitere Verhalten der Fahrzeuge vorgeben und/oder steuern. So kann die Navigation verschiedener Fahrzeuge zusätzlich über ein Leitsystem koordiniert werden. Das Kommunikationssystem kann in dem fahrerlosen Fahrzeug angeordnet sein.

Ferner wird ein Verfahren zur Lokalisierung eines fahrerlosen Fahrzeugs mittels des Lokalisierungssystems vorgeschlagen. Das Lokalisierungssystem wurde bereits in der vorherigen Beschreibung beschrieben. Das Lokalisierungssystem weist ein Sensorset zur Lokalisierung des Fahrzeugs in einem Innenbereich und zusätzlich mindestens eine Erfassungseinrichtung zur Lokalisierung des Fahrzeugs in einem Au-ßenbereich auf, wobei bei Erfassen des Annäherns oder Eintretens in einen Übergangsbereich zwischen einem Außenbereich und einem Innenbereich oder vice versa des Fahrzeugs ein Umschalten zwischen einer Lokalisierungsmethode in einem Außenbereich und einer Lokalisierungsmethode in einem Innenbereich oder vice versa des fahrerlosen Fahrzeugs erfolgt.

Erfindungsgemäß erfolgt eine Steuerung mehrerer fahrerloser Fahrzeuge über ein an dem Übergangsbereich angeordnetes Leitsystem derart, dass eine Koordination der Navigation der mehreren Fahrzeuge erfolgt. So kann ein Verkehrsfluss, also z. B. ein Ein- und/oder Ausfahren in den bzw. aus dem Innenbereich mehrerer fahrerloser Fahrzeuge gesteuert werden.

Bevorzugte Ausführungsformen der Erfindung werden nachfolgend anhand der beigefügten Zeichnung näher erläutert.

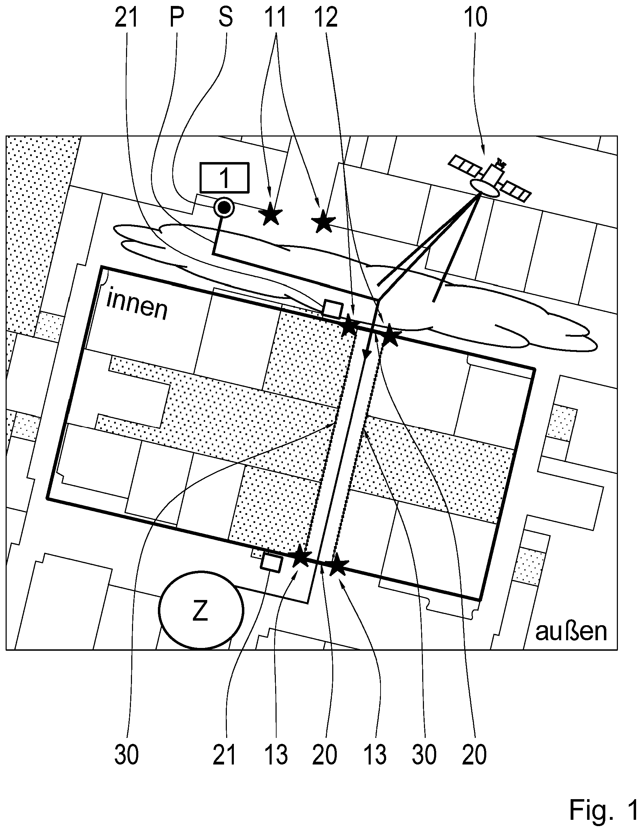

Figur 1 zeigt ein Lokalisierungssystem zur Steuerung eines fahrerlosen Fahrzeugs von einem Startpunkt zu einem Zielpunkt gemäß einer Ausführung der vorliegenden Erfindung.

Figur 1 zeigt ein beispielhaftes Szenario, bei dem ein Fahrweg P eines fahrerlosen Fahrzeugs 1 von einem Startpunkt bzw. Startort S zu einem Zielpunkt bzw. Zielort Z dargestellt ist. Der Startort S liegt in einem Außenbereich "Outdoor". Das fahrerlose Fahrzeug 1 muss zuerst einen Bereich des Außenbereichs "Outdoor" passieren, dann durch eine Halle, also einen Innenbereich "Indoor" fahren, um dann wieder im Außenbereich "Outdoor" seine Fahrt am Zielort Z beenden.

Zur Lokalisierung seines Standorts kann das fahrerlose Fahrzeug 1 im Außenbereich "Outdoor" auf eine satellitengestützte Lokalisierungsmethode über ein GNSS 10 zurückgreifen. So kann es seine Position innerhalb einer globalen Karte des relevanten Bereichs, welcher als Wolke in Figur 1 gezeichnet ist, ermitteln. Ein Außenbereich "Outdoor" weist in Regel eine sich immer wieder verändernde Infrastruktur auf, d.h. es gibt wenige oder keine fixe Orientierungspunkte, an denen sich Sensoren orientieren könnten. Außerdem ist in der Regel die am Fahrzeug 1 verbaute Sensorik bzw. das Sensorset empfindlich gegenüber Außeneinflüssen wie Verschmutzungen etc.. Zusätzlich ist die Lokalisierung mittels GNSS 10 deutlich zuverlässiger und genauer, insbesondere bei ausreichend starkem Signal, was im Außenbereich "Outdoor" in der Regel der Fall ist. Aus diesem Grund erfolgt die Lokalisierung in der Regel satellitengestützt. Es können aber dennoch Orientierungspunkte 11 vorgesehen sein, z. B. um eine Lokalisierung in nicht ideal vom Satellitensignal abgedeckten Bereichen zu ermöglichen. Wenn Orientierungspunkte fixe Punkte wie Hauskanten oder in ihrer Form eindeutig definierte und fixe Strukturen sind, können diese in der globalen Karte hinterlegt und für die Navigation herangezogen werden.

Der Innenbereich "Indoor" ist in Figur 1 der Bereich innerhalb des Rechtecks und kann eine Halle oder eine andere, in der Regel überdachte, Einrichtung sein. Ein Innenbereich "Indoor" ist durch eine vorhandene Infrastruktur gekennzeichnet, welche in einer lokalen Karte, welche entweder vorab erstellt wird oder mittels SLAM immer aktuell erstellt wird, dargestellt wird. Der Übergangsbereich 20 zwischen dem Innenbereich "Indoor" und dem Außenbereich "Outdoor" wird durch mindestens einen, vorteilhaft zwei Orientierungspunkte 12, 13 markiert. Vorteilhaft sind jeweils an einer Seite des Übergangs 20, welcher in der Regel ein Tor oder eine Tür oder ein anderer Durchgang ist, Orientierungspunkte 12, 13 angeordnet, so dass auch die Breite des Durchgangs damit markiert und definiert wird.

Sobald der Fahrweg P des Fahrzeugs 1 in den durch die Orientierungspunkte 12 gekennzeichneten Übergangsbereich 20 zwischen Außenbereich "Outdoor" und Innenbereich "Indoor" gelangt, werden die Orientierungspunkte 12 erfasst, entweder von dem Sensorset oder der Erfassungseinrichtung oder von beiden, und es erfolgt ein Umschalten der Lokalisierungsmethode von der Erfassungseinrichtung, welche über GNSS 100 arbeitet, zu dem Sensorset, welches mittels bereits beschriebener fahrzeuginterner Sensorik, z. B. Lidar, Radar, Kamera, etc. arbeitet.

Innerhalb des Innenbereichs "Indoor" wird das fahrerlose Fahrzeug 1 mittels seinem Sensorset gesteuert, z. B. mittels einer Kombination aus Lidar, Radar, Kamera, Funk, WLAN oder einer Kombination daraus, wie bereits beschrieben. Vorteilhaft erfolgt die Lokalisierung mittels SLAM. Die gestrichelte Linie 30 markiert in Figur 1 den mittels Laserscan bzw. Scanmatching ermittelten Fahrweg P für das fahrerlose Fahrzeug 1.

Sobald der Fahrweg P des Fahrzeugs 1 in den durch die Orientierungspunkte 13 gekennzeichneten Übergangsbereich 20 zwischen Innenbereich "Indoor" und Außenbereich "Outdoor" gelangt, werden die Orientierungspunkte 13 erfasst, und es erfolgt ein Umschalten der Lokalisierungsmethode von dem Sensorset zu der Erfassungseinrichtung, damit das fahrerlose Fahrzeug 1 wieder mittels GNSS 10 im Außenbereich "Outdoor" lokalisiert und zum Zielort Z navigiert werden kann.

Für den Fall, dass mehrere fahrerlose Fahrzeuge 1 vorhanden sind, kann ein am Übergangsbereich 20 angeordnetes Leitsystem 21, welches mit den entsprechend ausgestatteten Fahrzeugen 1 kommunizieren kann, vorgesehen sein. Dieses Leitsystem 21 dient zur Koordination der Ein- bzw. Ausfahrt in den Innenbereich "Indoor" bzw. den Außenbereich "Outdoor". Außerdem kann es noch weitere Aufgaben erfüllen, z. B. ein Koordinieren der Fahrzeuge 1 und deren Aufgabe.

### Bezugszeichenliste

- 1: fahrerloses Fahrzeug
- 11; 12, 13: Orientierungspunkte
- 20: Übergangsbereich
- 21: Leitsystem
- 10: GNSS (Satellit)
- Indoor: Innenbereich
- Outdoor: Außenbereich
- S: Startpunkt
- Z: Zielpunkt
- P: Fahrweg

## Patentansprüche

1. Lokalisierungssystem für ein fahrerloses Fahrzeug (1), welches fahrerlos von einem Startpunkt (S) zu einem Zielpunkt (Z) fährt, wobei das Lokalisierungssystem ein Sensorset zur Lokalisierung des Fahrzeugs (1) in einem Innenbereich (Indoor) und zusätzlich mindestens eine Erfassungseinrichtung zur Lokalisierung des Fahrzeugs (1) in einem Außenbereich (Outdoor) aufweist, und wobei das Lokalisierungssystem mindestens einen Orientierungspunkt (12, 13) an einem Übergangsbereich (20) zwischen Außenbereich (Outdoor) und Innenbereich (Indoor) oder vice versa bereitstellt, wobei bei Erfassen des mindestens einen Orientierungspunkts (12, 13) durch das Sensorset und/oder die Erfassungseinrichtung ein Umschalten von einer Lokalisierungsmethode zur Lokalisierung des Fahrzeugs in einem Innenbereich (Indoor) zu einer Lokalisierungsmethode zur Lokalisierung des Fahrzeugs in einem Außenbereich (Outdoor) oder vice versa erfolgt, **dadurch gekennzeichnet, dass** das Lokalisierungssystem zusätzlich eine Kommunikationseinrichtung zur Kommunikation mit einem zusätzlich am Übergangsbereich (20) bereitgestellten Leitsystem (21) aufweist, wobei das Leitsystem zur Kommunikation und Steuerung mehrerer fahrerloser Fahrzeuge (1) gebildet ist.

2. Lokalisierungssystem nach Anspruch 1, wobei der mindestens eine Orientierungspunkt (12, 13) eines aus einem QR-Code, einer definierten Struktur einer Infrastruktur, ein oder mehrere fest installierte Objekte, eine oder mehrere Fahrspuren, oder eine Kombination daraus ist.

3. Lokalisierungssystem nach einem der vorhergehenden Ansprüche, wobei die Erfassung des Orientierungspunkts (12, 13) durch optische Erfassung oder durch 3D-Erfassung erfolgt.

4. Lokalisierungssystem nach einem der vorhergehenden Ansprüche, wobei die Lokalisierung in einem Außenbereich (Outdoor) mittels der Erfassungseinrichtung mittels GNSS und/oder Inertialsensorik erfolgt.

5. Lokalisierungssystem nach einem der vorhergehenden Ansprüche, wobei das Sensorset zur Lokalisierung in einem Innenbereich (Indoor) mindestens eines aus LIDAR, RADAR, Kamera, Ultraschall, WLAN, UWB, Funk, Kamera oder eine Kombination daraus umfasst.

6. Verfahren zur Lokalisierung eines fahrerlosen Fahrzeugs (1) mit einem Lokalisierungssystem nach einem der vorherigen Ansprüche, wobei das Lokalisierungssystem ein Sensorset zur Lokalisierung des Fahrzeugs (1) in einem Innenbereich (Indoor) und zusätzlich mindestens einer Erfassungseinrichtung zur Lokalisierung des Fahrzeugs (1) in einem Außenbereich (Outdoor) aufweist, wobei bei Erfassen des Annäherns oder Eintretens in einen Übergangsbereich (20) zwischen einem Außenbereich (Outdoor) und einem Innenbereich (Indoor) oder vice versa des Fahrzeugs (1) ein Umschalten zwischen einer Lokalisierungsmethode in einem Außenbereich (Outdoor) und einer Lokalisierungsmethode in einem Innenbereich (Indoor) oder vice versa des fahrerlosen Fahrzeugs (1) erfolgt, **dadurch gekennzeichnet, dass** eine Steuerung mehrerer fahrerloser Fahrzeuge (1) über ein an dem Übergangsbereich (20) angeordnetes Leitsystem (21) derart erfolgt, dass eine Koordination der Navigation der mehreren Fahrzeuge (1) erfolgt.

## Claims

1. Localization system for a driverless vehicle (1) that travels without a driver from a starting point (S) to a destination point (Z), wherein the localization system has a sensor set for localizing the vehicle (1) in an indoor area (Indoor) and additionally at least one detection device for localizing the vehicle (1) in an outdoor area (Outdoor), and wherein the localization system provides at least one orientation point (12, 13) at a transition area (20) between an outdoor area (Outdoor) and an indoor area (Indoor) or vice versa, wherein, when the at least one orientation point (12, 13) is detected by the sensor set and/or the detection device, a changeover takes place from a localization method for localizing the vehicle in an indoor area (Indoor) to a localization method for localizing the vehicle in an outdoor area (Outdoor) or vice versa, **characterized in that** the localization system additionally has a communication device for communicating with a control system (21) that is additionally provided at the transition area (20), wherein the control system is designed to communicate with and control multiple driverless vehicles (1).

2. Localization system according to Claim 1, wherein the at least one orientation point (12, 13) is one of a QR code, a defined structure of an infrastructure, one or more fixedly installed objects, one or more traffic lanes, or a combination thereof.

3. Localization system according to either of the preceding claims, wherein the orientation point (12, 13) is detected through optical detection or through 3D detection.

4. Localization system according to one of the preceding claims, wherein the localization in an outdoor area (Outdoor) is performed by the detection device by way of GNSS and/or an inertial sensor system.

5. Localization system according to one of the preceding claims, wherein the sensor set for carrying out localization in an indoor area (Indoor) comprises at least one of a lidar, radar, camera, ultrasound, WLAN, UWB, radio, camera or a combination thereof.

6. Method for localizing a driverless vehicle (1) using a localization system according to one of the preceding claims, wherein the localization system has a sensor set for localizing the vehicle (1) in an indoor area (Indoor) and additionally at least one detection device for localizing the vehicle (1) in an outdoor area (Outdoor), wherein, upon detection that the vehicle (1) is approaching or has entered a transition area (20) between an outdoor area (Outdoor) and an indoor area (Indoor) or vice versa, a changeover takes place between a localization method in an outdoor area (Outdoor) and a localization method in an indoor area (Indoor) or vice versa for the driverless vehicle (1), **characterized in that** multiple driverless vehicles (1) are controlled via a control system (21) arranged at the transition area (20) such that the navigation of the multiple vehicles (1) is coordinated.

## Revendications

1. Système de localisation pour un véhicule (1) sans conducteur qui se déplace sans conducteur d'un point de départ (S) vers un point d'arrivée (Z), dans lequel le système de localisation comporte un ensemble de capteurs servant à la localisation du véhicule (1) dans une zone intérieure (Indoor) et en outre au moins un dispositif de détection servant à la localisation du véhicule (1) dans une zone extérieure (Outdoor), et dans lequel le système de localisation fournit au moins un point d'orientation (12, 13) au niveau d'une zone de transition (20) entre l'extérieur (Outdoor) et l'intérieur (Indoor) ou inversement, dans lequel, lors de la détection dudit au moins un point d'orientation (12, 13) par l'ensemble de capteurs et/ou par le dispositif de détection, une commutation d'une méthode de localisation servant à la localisation du véhicule dans une zone intérieure (Indoor) à une méthode de localisation servant à la localisation du véhicule dans une zone extérieure (Outdoor) ou inversement est effectuée, **caractérisé en ce que** le système de localisation comporte en outre un dispositif de communication servant à la communication avec un système de guidage (21) qui est en outre prévu au niveau de la zone de transition (20), dans lequel le système de guidage est conçu pour la communication et la commande d'une pluralité de véhicules (1) sans conducteur.

2. Système de localisation selon la revendication 1, dans lequel ledit au moins un point d'orientation (12, 13) est l'un d'un code QR, d'une structure définie d'une infrastructure, d'un ou plusieurs objets installés de manière fixe, d'une ou plusieurs voies de circulation, ou d'une combinaison de ceux-ci.

3. Système de localisation selon l'une des revendications précédentes, dans lequel la détection du point d'orientation (12, 13) est effectuée par détection optique ou par détection 3D.

4. Système de localisation selon l'une des revendications précédentes, dans lequel la localisation dans une zone extérieure (Outdoor) est effectuée au moyen du dispositif de détection par GNSS et/ou par capteurs inertiels.

5. Système de localisation selon l'une des revendications précédentes, dans lequel l'ensemble de capteurs servant à la localisation dans une zone intérieure (Indoor) comprend au moins l'un d'un LIDAR, d'un RADAR, d'une caméra, d'ultrasons, d'un WLAN, d'un UWB, d'un système radio, d'une caméra ou d'une combinaison de ceux-ci.

6. Procédé de localisation d'un véhicule (1) sans conducteur à l'aide d'un système de localisation selon l'une des revendications précédentes, dans lequel le système de localisation comporte un ensemble de capteurs servant à la localisation du véhicule (1) dans une zone intérieure (Indoor) et en outre au moins un dispositif de détection servant à la localisation du véhicule (1) dans une zone extérieure (Outdoor), dans lequel, lors de la détection du fait que le véhicule (1) se rapproche ou entre dans une zone de transition (20) entre une zone extérieure (Outdoor) et une zone intérieure (Indoor) ou inversement, une commutation entre une méthode de localisation dans une zone extérieure (Outdoor) et une méthode de localisation dans une zone intérieure (Indoor) ou inversement du véhicule (1) sans conducteur est effectuée, **caractérisé en ce qu'**une commande d'une pluralité de véhicules (1) sans conducteur est effectuée par l'intermédiaire d'un système de guidage (21) disposé au niveau de la zone de transition (20) de telle sorte qu'une coordination de la navigation de la pluralité de véhicules (1) soit effectuée.
